# EUROPEAN PATENT APPLICATION

(11) **EP 4 704 012 A1**
(43) Date of publication of application: **04.03.2026**
(21) Application number: 24796995.9
(22) Date of filing: 23.04.2024
(51) Int. Cl.: G06Q 30/0201

(54) **CALCULATION SYSTEM, CALCULATION METHOD, AND CALCULATION PROGRAM**

(30) Priority: 25.04.2023 JP 2023071515; 28.07.2023 JP 2023123319
(71) Applicant: Godot Inc., Kobe-shi, Hyogo 650-0035 (JP)
(72) Inventor: MORIYAMA, Ken, Kobe-shi, Hyogo 650-0035 (JP); SUMIMOTO, Mei, Kobe-shi, Hyogo 650-0035 (JP); ONIZAWA, Ryo, Kobe-shi, Hyogo 650-0035 (JP); SUZUI, Go, Kobe-shi, Hyogo 650-0035 (JP)
(74) Representative: Meissner Bolte Partnerschaft mbB
(86) International application number: PCT/JP2024/015832
(87) International publication number: WO 2024/225249

(57) **Abstract**

To consider a mental load of a target person in evaluation of a customer journey. A calculation system includes a first mental bandwidth calculation unit that calculates, based on a first mental load amount indicating a degree of a mental load in a first target person required to pass each of a plurality of steps of a first customer journey, for each of the plurality of steps included in the first customer journey, a first mental bandwidth indicating a degree of a mental load with which the first target person is capable of passing the step, a step acquisition unit that acquires each of a plurality of steps of the second customer journey, a second mental load calculation unit that calculates, based on the first mental load amount, a second mental load amount of the second customer journey, and a second mental bandwidth calculation unit that calculates, based on the first mental bandwidth, a second mental bandwidth indicating a degree of a mental load with which a second target person of the second customer journey is capable of passing the step.

## Description

### Cross-Reference to Related Applications

The present application claims priority from Japanese Patent Application No. 2023-071515 filed on April 25, 2023 and Japanese Patent Application No. 2023-123319 filed on July 28, 2023, the entire content of which are incorporated herein by reference.

### Technical Field

The present disclosure relates to a calculation system, a calculation method, and a calculation program.

### Background Art

There has been known a technique for evaluating a behavior pattern of a customer and a customer journey of the customer.

For example, a marketing support system described in Patent Literature 1 accesses first customer information including information items relating to customer attributes owned by a company and records second customer information including information items partially overlapping the information items and concerning a result of a customer survey. The system analyzes the second customer information, derives customer attributes from the information items of the second customer information, and supports creation of a mathematical model of a customer behavior pattern for a commodity or a service provided by the company. The system displays a customer attribute having a correlation equal to or larger than a predetermined value with the customer behavior pattern among the customer attributes.

### Citation List

### Patent Literature

Patent Literature 1: Japanese Patent Laid-Open No. 2002-83110

### Summary of Invention

### Technical Problem

However, in the system described in Patent Literature 1, since a behavior pattern of the customer is predicted based on accumulated customer information, a mental load in the customer is not considered. For that reason, a correspondence relation between steps included in a customer journey and a degree of a mental load of the customer in a customer behavior cannot be evaluated.

Thus, an object of the present disclosure is to consider a mental load of a target person in evaluation of a customer journey.

A calculation system according to an aspect of the present disclosure includes: a first mental bandwidth calculation unit that calculates, based on a first mental load amount indicating a degree of a mental load in at least one first target person required to pass each of a plurality of steps included in a first customer journey, for each of the plurality of steps included in the first customer journey, a first mental bandwidth indicating a degree of a mental load with which the at least one first target person is capable of passing the step; a step acquisition unit that acquires, in association with order in a second customer journey, each of a plurality of steps included in the second customer journey; a second mental load calculation unit that calculates, based on the first mental load amount, a second mental load amount indicating a degree of a mental load required to pass each of the plurality of steps included in the second customer journey; and a second mental bandwidth calculation unit that calculates, based on the first mental bandwidth, for each of the plurality of steps included in the second customer journey, a second mental bandwidth indicating a degree of a mental load with which at least one second target person is capable of passing the step.

Note that, in the present disclosure, "unit" does not simply mean physical means and also includes a function of the "unit" being implemented by software. A function of one "unit" or device may be implemented by two or more physical means, devices, or kinds of software or functions of two or more "units" or devices may be implemented by one physical means, device, or kind of software.

### Advantageous Effect of Invention

According to the present disclosure, it is possible to consider a mental load of a target person in evaluation of a customer journey.

### Brief Description of Drawings

[Figure 1] Figure 1 is a diagram illustrating an overview of processing in a calculation system 100 according to an embodiment of the present disclosure.
[Figure 2] Figure 2 is a diagram illustrating a configuration of the calculation system 100 according to the embodiment of the present disclosure.
[Figure 3] Figure 3 is a diagram illustrating an example of a first mental load amount stored in a storage unit 110.
[Figure 4] Figure 4 is a diagram illustrating an example of a first mental bandwidth stored in the storage unit 110.
[Figure 5] Figure 5 is a diagram illustrating an example of a second mental load amount stored in the storage unit 110.
[Figure 6] Figure 6 is a diagram illustrating an example of a second mental bandwidth stored in the storage unit 110.
[Figure 7] Figure 7 is a diagram illustrating an example of a display screen displayed according to display information.
[Figure 8] Figure 8 is a flowchart illustrating an example of processing in the calculation system 100.
[Figure 9] Figure 9 is a diagram illustrating an example of a hardware configuration of a computer 900.

### Description of Embodiment

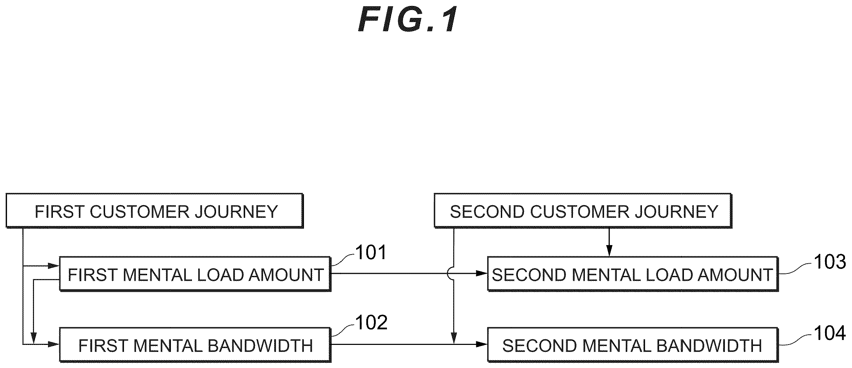

A preferred embodiment of the present disclosure is explained with reference to the accompanying drawings. Figure 1 is a diagram illustrating an overview of processing in a calculation system 100 according to an embodiment of the present disclosure.

The calculation system 100 is an information processing system implemented by a calculation program and is an information processing system that calculates a degree of a mental load of a target person in a customer journey.

Here, the customer journey is obtained by, for example, organizing, for each of steps, changes in behaviors, thoughts, and emotions of a target person (for example, a customer, a service user, a national, or a resident) and visualizing a flow to a goal assumed by a service provider. The goal assumed by the service provider includes, for example, use, purchase, or contracting of a commodity or a service, visit to a web page or the like introducing the commodity or the service, use of an administrative service, use of a medical examination, vaccination, or the like. The service may be a for-profit service or may be a public service.

First, the calculation system 100 calculates a first mental load amount (101) indicating a degree of a mental load for passing through a first customer journey in a first target person. Subsequently, the calculation system 100 calculates, based on the first mental load amount, for each of a plurality of steps included in the first customer journey, a first mental bandwidth (102) indicating a degree of a mental load with which the first target person is capable of passing the step.

Then, the calculation system 100 calculates, based on the first mental load amount, a second mental load amount (103) indicating a degree of a mental load required to pass each of a plurality of steps included in a second customer journey. The calculation system 100 calculates, based on the first mental bandwidth, for each of the plurality of steps included in the second customer journey, a second mental bandwidth (104) indicating a degree of a mental load with which a second target person is capable of passing the step.

Further, the calculation system 100 outputs display information for displaying, on an information processing device, in association with order in the second customer journey, each of the plurality of steps included in the second customer journey, the second mental load amount, and the second mental bandwidth.

For the purpose of deepening understanding about a behavior pattern of a potential customer or an existing customer or a target person whose information is desired to be extracted or whose behavior is desired to be prompted and devising effective measures, various methods or techniques for supporting designing of a customer journey have been utilized mainly in the marketing field. The customer journey is also called customer journey map, persona map, or behavior process map. However, in these methods, since the customer journey is created greatly depending on the sensitivity of a creator, there are many problems from the viewpoint of quality guarantee and reproducibility. Since these methods are basically information processing methods based on qualitative subjective data, the methods lack scientific evidence and it is difficult to use the methods together with the data science and the AI (artificial intelligence) technology.

Further, the customer journey of the related art is not designed taking into account time allowance, cognitive and perceptual constraints (an information reception/processable amount in a fixed time), or behavior characteristics of a target person. For that reason, it can also be said that the target person is sometimes in a situation in which the target person is almost forcibly involved in design on a service provider side. That is, the current situation is considered to be a situation in which advertisement strategies, health promotions, and the like are carried out and precious time and attention resources of the target person are wasted by various entities under a rough theory of "depriving time and attention resources of the target person as long as possible". That is, the design of the customer journey of the related art does not consider a mental load, in particular, time invested by the target person.

Thus, the calculation system 100 calculates a mental load of the target person in the customer journey. Accordingly, the calculation system 100 can evaluate the customer journey based on the mental load of the target person. The calculation system 100 supports implementation of service design for not excessively applying a load to a mental bandwidth of the target person by appropriately distributing mental resources of the target person in the steps included in the customer journey.

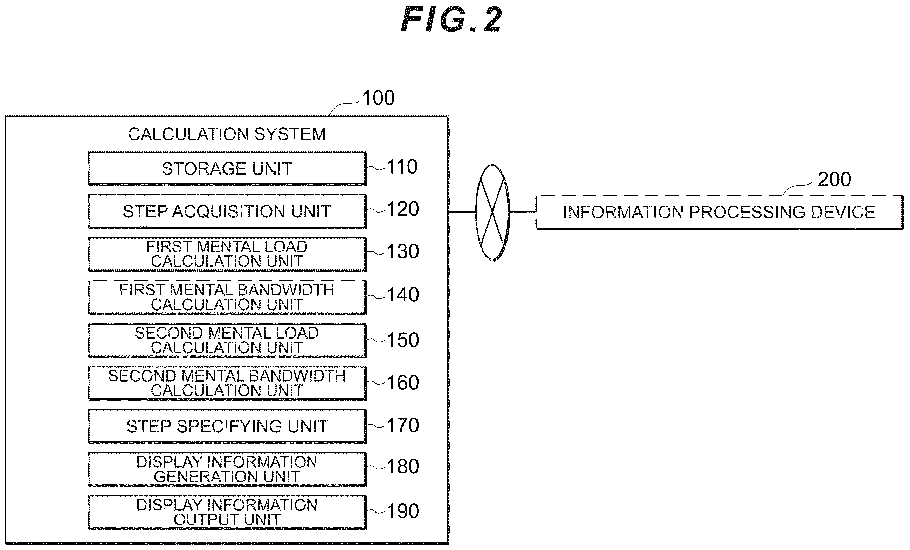

Figure 2 is a diagram illustrating a configuration of the calculation system 100 according to the embodiment of the present disclosure. The calculation system 100 is communicably connected to an information processing device 200 via a network such as the Internet. Details of the calculation system 100 are explained below.

The information processing device 200 is a computer used by a user of the calculation system 100 and is a smartphone, a tablet terminal, a personal computer, or the like.

The information processing device 200 acquires display information output from the calculation system 100. The user refers to a calculation result in the calculation system 100.

Note that only one information processing device 200 is illustrated in Figure 2. However, a plurality of information processing devices 200 may be provided.

Subsequently, details of the calculation system 100 are explained. The calculation system 100 includes a storage unit 110, a step acquisition unit 120, a first mental load calculation unit 130, a first mental bandwidth calculation unit 140, a second mental load calculation unit 150, a second mental bandwidth calculation unit 160, a step specifying unit 170, a display information generation unit 180, and a display information output unit 190. The units illustrated in Figure 2 can be implemented by, for example, using a storage region or a processor executing a program stored in the storage region.

The storage unit 110 stores information to be processed in the calculation system 100. The storage unit 110 can store, for example, a first mental load amount, a first mental bandwidth, a second mental load amount, and a second mental bandwidth explained below.

The step acquisition unit 120 acquires, in association with order in a customer journey, each of a plurality of steps included in the customer journey.

The step acquisition unit 120 can acquire each of a plurality of steps included in a first customer journey and can acquire each of a plurality of steps included in a second customer journey.

Each of the plurality of steps included in the customer journey includes a plurality of behavior steps and at least one transition step among the plurality of behavior steps. That is, each of the plurality of steps includes, when the customer journey includes two behavior steps, one transition step between the two behavior steps and includes, when the customer journey includes three behavior steps, two transition steps among the three behavior steps.

Specifically, each of the plurality of steps included in the customer journey includes, for example, reception of a message, opening of the message, reading finish of the message, visit to a link destination described in the message, and application at the link destination.

Note that, each of the plurality of steps included in the customer journey may be a step using a digital device (for example, access to a web page, scanning of a two-dimensional code, or message transmission and reception) or may be a step not using a digital device (for example, visit or entry by handwriting) performed in the real world.

The first mental load calculation unit 130 calculates a first mental load amount based on a behavior mental load amount in at least one first target person required for each of the plurality of behavior steps included in the first customer journey and a transition mental load amount in at least one first target person required for at least one transition step included in the first customer journey and stores the calculated first mental load amount in the storage unit 110.

Here, a mental load (a mental load indicated by the first mental load amount and a mental load indicated by a second mental load amount explained below) may include a value corresponding to a time required to pass each of the plurality of steps included in the customer journey, for example. The mental load may include, according to an attribute of a target person passing through the customer journey, a value corresponding to a load (a mental burden and an attention resource) applied to the target person. The value corresponding to the load applied to the target person may be an amount of a biologically decided load. Specifically, for example, the value corresponding to the influence on the target person may be larger as the target person is older and may be larger as a character amount referred to by the target person is larger or a character size is smaller.

The mental load amount can also be grasped as, so to speak, accessibility in the target person. That is, the mental load amount being smaller indicates that the target person can more easily pass a step and indicates that the accessibility is higher.

The first mental load amount indicates a degree of a mental load in at least one first target person required to pass each of the plurality of steps included in the first customer journey.

The first mental load amount may be mental load amounts in a plurality of first target persons. In this case, the first mental load amount may be a distribution of first mental load amounts of each of the plurality of first target persons.

The first mental load calculation unit 130 can calculate the first mental load amount based on, for example, similar cases in the past or a result of a trial or a simulator.

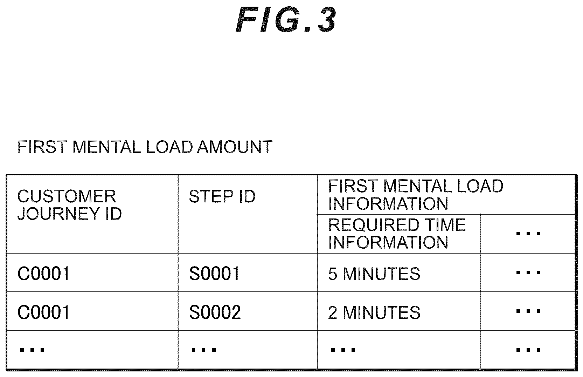

Figure 3 is a diagram illustrating an example of the first mental load amount stored in the storage unit 110. The first mental load amount stored in the storage unit 110 includes, for example, a customer journey ID, a step ID, and first mental load information. The first mental load information further includes, for example, required time information.

Here, the customer journey ID is information for identifying a customer journey processed in the calculation system 100. The step ID is information for identifying each of a plurality of steps included in the customer journey. The first mental load information is information indicating the first mental load amount. The required time information is information indicating a value corresponding to a time required to pass each of the plurality of steps included in the customer journey.

The first mental bandwidth calculation unit 140 calculates, based on the first mental load amount, for each of a plurality of steps included in a first customer journey, a first mental bandwidth indicating a degree of a mental load with which at least one first target person is capable of passing the step and stores the calculated first mental bandwidth in the storage unit 110.

Here, a mental bandwidth (a mental bandwidth indicated by the first mental bandwidth and a mental bandwidth indicated by a second mental bandwidth explained below) indicates a degree of a mental load with which a target person (for example, the first target person or a second target person explained below) is capable of passing each of the plurality of steps included in the customer journey. That is, the target person can pass a step having a mental load smaller than the mental bandwidth and, on the other hand, cannot pass a step having a mental load larger than the mental bandwidth.

The mental bandwidth may be a value corresponding to a time that the target person can invest for the passage. The mental bandwidth may be a value corresponding to a degree of a mental burden or an attention resource that the target person can invest for the passage. That is, the mental bandwidth may indicates a level at which a ratio of a fixed number or more of target persons unpleasantly feel that time is wasted or a level at which a fixed ratio or more of respondents drop out, such as five minutes or 2000 characters in the case of a questionnaire survey.

It can also be said that the mental bandwidth indicates, so to speak, a degree of a mental load allowable by the target person.

The mental bandwidth can be different depending on loyalty of a target person. Specifically, for example, since a target person favorable to a service provider can pass a step having a mental load with a higher load, a mental bandwidth of the favorable target person is a high level.

The mental bandwidth may be set, for example, for each attribute of the target person. Here, the attribute may be, for example, an attribute corresponding to an age, sex, an address, or a family structure. Accordingly, the calculation system 100 can evaluate the customer journey for each attribute of the target person.

As the degree of the mental load allowable by the target person, the mental bandwidth may be a value fixed beforehand (for example, according to personality or a biological characteristic of the target person) or may be a value fluctuating according to a predetermined method. Specifically, the mental bandwidth may be, for example, a value fluctuating according to growth or aging of the target person or timing when the target person passes a step (for example, an hour, year, month, and date, a season, weather, temperature and humidity) or may be a value fluctuating according to predetermined processing (for example, processing based on a behavioral science method such as nudge) for the target person. In this case, the predetermined processing for the target person can also be grasped as, so to speak, "mental bandwidth engineering" for individually controlling a mental bandwidth.

The first mental bandwidth calculation unit 140 calculates a first mental bandwidth based on the first mental load amount. The first mental bandwidth may be information indicating one value or may be information indicating a range of a fixed value.

Specifically, when the first mental load amount is a mental load amount of one first target person, the first mental bandwidth calculation unit 140 can set the mental load amount as the first mental bandwidth.

When the first mental load amount is mental load amounts of a plurality of first target persons, the first mental bandwidth calculation unit 140 may set, for example, for each of a plurality of steps, the highest first mental load amount or an average, a median, or a mode in a distribution of first mental load amounts as the first mental bandwidth or may set, as the first mental bandwidth, a range decided by an average plus-minus standard deviation in the distribution of the first mental load amounts or a range from a first quartile to a third quartile. Note that a calculation method for the first mental bandwidth is not limited to the above.

The first mental bandwidth calculation unit 140 can calculate the first mental bandwidth based on, for example, similar cases in the past or a result of a trial or a simulator.

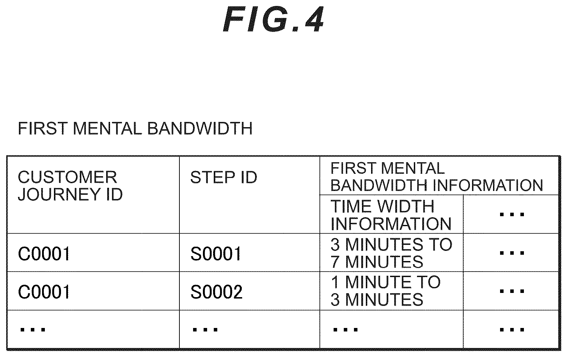

Figure 4 is a diagram illustrating an example of the first mental bandwidth stored in the storage unit 110. The first mental bandwidth stored in the storage unit 110 includes, for example, a customer journey ID, a step ID, and first mental bandwidth information. The first mental bandwidth information further includes, for example, time width information.

Here, the first mental bandwidth information is information indicating the first mental bandwidth. The time width information is information indicating the width of a time in which the target person is capable of passing each of the plurality of steps included in the customer journey.

The second mental load calculation unit 150 calculates, based on the first mental load amount, a second mental load amount indicating a degree of a mental load required to pass each of the plurality of steps included in the second customer journey and stores the calculated second mental load amount in the storage unit 110.

The second mental load amount indicates a degree of a mental load in at least one second target person required to pass each of the plurality of steps included in the second customer journey.

Here, the first mental load amount is decided for each of the plurality of steps included in the first customer journey. Thus, the second mental load calculation unit 150 compares the plurality of steps included in the second customer journey and the plurality of steps associated with the first mental load amount and calculates, based on the first mental load amount, a second mental load amount for each of the plurality of steps included in the second customer journey.

Specifically, it is assumed that the first customer journey includes a step A, a step B, a step C, and a step D and the second customer journey includes the step A and the step D. In this case, the step A and the step D are common to the first and second customer journeys. The first mental load amount indicates a mental load amount of each of the step A, the step B, the step C, and the step D. Thus, the second mental load calculation unit 150 calculates a second mental load amount of each of the step A and the step D using a first mental load amount of each of the step A and the step D. Note that a calculation method for the second mental load amount is not limited to the above.

A second mental load amount of each of the step A and the step D in the second customer journey transitioning from the step A to the step D and a second mental load amount of each of the step D and the step A in the second customer journey transitioning from the step D to the step A may be different values. Specifically, in a customer journey in which a mental load gradually increases and a customer journey in which a load gradually decreases, loads of the target person are sometimes different. Thus, the second mental load calculation unit 150 can calculate, considering the order of each of a plurality of steps in the second customer journey as well, a second mental load amount of each of the plurality of steps. Accordingly, the second mental load calculation unit 150 can calculate a second mental load amount with high accuracy.

The second mental load calculation unit 150 may set different mental load amounts for a plurality of steps in which an information amount (for example, the number of characters and a data capacity) of message content presented to the target person is the same. That is, the second mental load calculation unit 150 may calculate a different second mental load amount according to a context and easiness of information collection because an information load is different depending on presence or absence of decision making after message content reading finish or difficulty or complexity (the number of choices) of the decision making.

The second target person may be a target person having an attribute that is the same as or similar to the attribute of the first target person. Accordingly, the second mental load calculation unit 150 and the second mental bandwidth calculation unit 160 explained below can calculate the second mental load amount and the second mental bandwidth at high accuracy based on the first mental load amount and the first mental bandwidth.

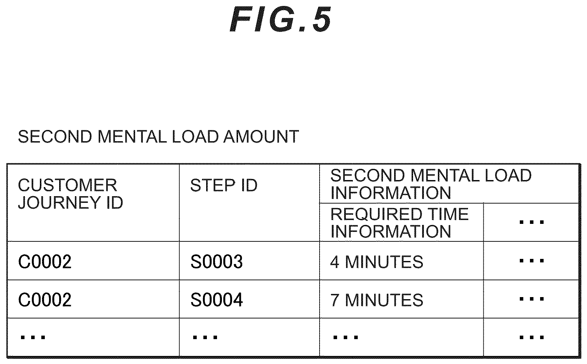

Figure 5 is a diagram illustrating an example of the second mental load amount stored in the storage unit 110. The second mental load amount stored in the storage unit 110 includes, for example, a customer journey ID, a step ID, and second mental load information. The second mental load information further includes, for example, required time information. Here, the second mental load information is information indicating the second mental load amount.

The second mental bandwidth calculation unit 160 calculates, based on the first mental bandwidth, for each of the plurality of steps included in the second customer journey, a second mental bandwidth indicating a degree of a mental load with which at least one second target person is capable of passing the step and stores the calculated second mental bandwidth in the storage unit 110.

Here, the first mental bandwidth is decided for each of the plurality of steps included in the first customer journey. Thus, the second mental bandwidth calculation unit 160 compares the plurality of steps included in the second customer journey and the plurality of steps associated with the first mental bandwidth and calculates, based on the first mental bandwidth, a second mental bandwidth for each of the plurality of steps included in the second customer journey.

Specifically, it is assumed that the first customer journey includes a step A, a step B, a step C, and a step D and the second customer journey includes the step A and the step D. In this case, the step A and the step D are common to the first and second customer journeys. The first mental bandwidth indicates a mental bandwidth of each of the step A, the step B, the step C, and the step D. Thus, the second mental bandwidth calculation unit 160 calculates a second mental bandwidth of each of the step A and the step D using a first mental bandwidth of each of the step A and the step D. Note that a calculation method for the second mental bandwidth is not limited to the above.

A second mental bandwidth of each of the step A and the step D in the second customer journey transitioning from the step A to the step D and a second mental bandwidth of each of the step D and the step A in the second customer journey transitioning from the step D to the step A may be different values. That is, the second mental bandwidth calculation unit 160 can calculate, considering the order of each of a plurality of steps in the second customer journey as well, a second mental bandwidth of each of the plurality of steps. Accordingly, the second mental bandwidth calculation unit 160 can calculate a second mental bandwidth with high accuracy.

The second mental bandwidth calculation unit 160 may set different mental bandwidths for a plurality of steps in which an information amount (for example, the number of characters and a data capacity) of message content presented to the target person is the same. That is, the second mental bandwidth calculation unit 160 may calculate a different second mental bandwidth according to a context and easiness of information collection because an information load is different depending on presence or absence of decision making after message content reading finish or difficulty or complexity (the number of choices) of the decision making.

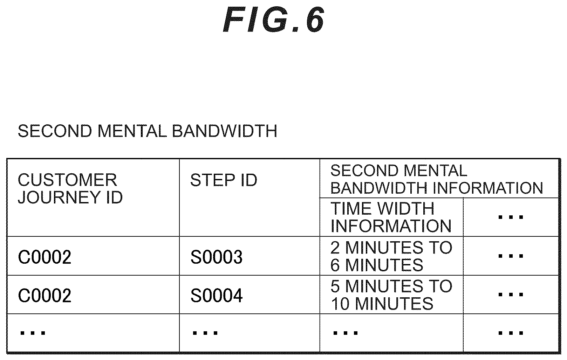

Figure 6 is a diagram illustrating an example of the second mental bandwidth stored in the storage unit 110. The second mental bandwidth stored in the storage unit 110 includes, for example, a customer journey ID, a step ID, and second mental bandwidth information. The second mental bandwidth information further includes, for example, time width information. Here, the second mental bandwidth information is information indicating the second mental bandwidth.

The step specifying unit 170 specifies at least one step in which a second mental load amount exceeds a second mental bandwidth among the plurality of steps included in the second customer journey.

The step in which the second mental load amount exceeds the second mental bandwidth indicates that a certain target person who cannot pass the step is present. That is, the step can be evaluated as a step that should be improved among a plurality of steps included in a customer journey. Thus, the step specifying unit 170 specifies at least one step in which a second mental load amount exceeds a second mental bandwidth. Accordingly, the user of the calculation system 100 can grasp the step that should be improved among the plurality of steps included in the customer journey.

The step specifying unit 170 can specify, for each of a plurality of target persons, at least one step in which a second mental load amount exceeds a second mental bandwidth. Accordingly, the calculation system 100 can evaluate the customer journey considering accessibility of each of the plurality of target persons.

The display information generation unit 180 outputs display information for displaying, on the information processing device, in association with order in the second customer journey, each of the plurality of steps included in the second customer journey, the second mental load amount, and the second mental bandwidth.

The display information is data for displaying, for each of the plurality of steps included in the second customer journey, each of the plurality of steps, the second mental load amount, and the second mental bandwidth.

The display information generation unit 180 can generate display information in which the display of the second mental load amount and the second mental bandwidth is switched according to operation of changing at least one step of the plurality of steps included in the second customer journey on a display screen displayed according to the display information.

Here, the operation of changing at least one step includes, for example, operation (for example, mouse operation, touch operation, or keyboard operation) on the information processing device 200 by the user of the calculation system 100 for referring to the display screen.

Specifically, in response to the operation of changing at least one step, the calculation system 100 acquires operation information concerning the operation. Subsequently, the step acquisition unit 120 acquires, in association with order after the change, each of the plurality of steps included in the second customer journey after the change. The second mental load calculation unit 150 and the second mental bandwidth calculation unit 160 calculate a second mental load amount and a second mental bandwidth in the second customer journey after the change. Then, the display information generation unit 180 generates display information based on the second mental load amount and the second mental bandwidth in the second customer journey after the change.

The display information output unit 190 outputs the display information.

The display information output unit 190 can output the display information to, for example, the information processing device 200. Accordingly, the user of the calculation system 100 can intuitively grasp a calculation result by the calculation system 100 referring to the display information.

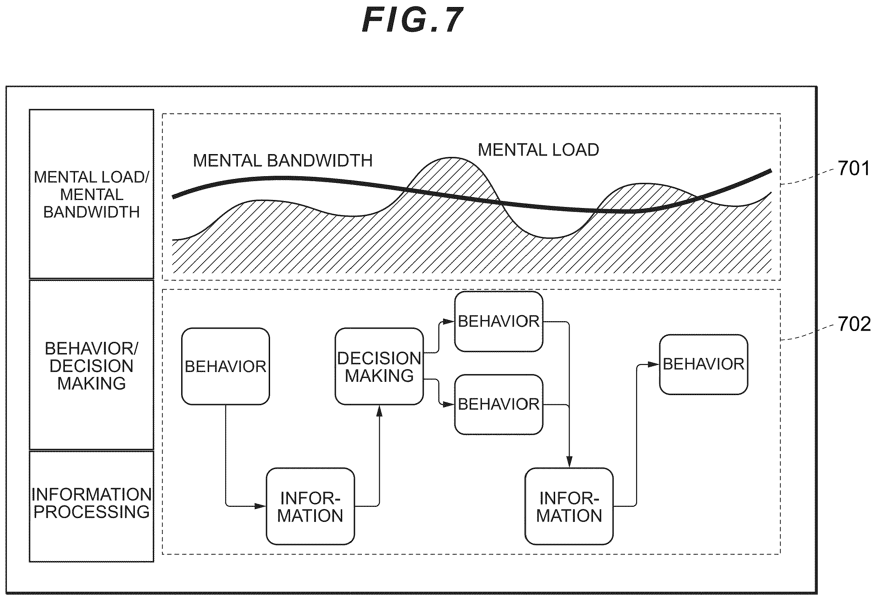

Figure 7 is a diagram illustrating an example of a display screen displayed according to the display information.

The screen illustrated in Figure 7 includes, for example, a region 701 where the second mental load amount and the second mental bandwidth in the second customer journey are displayed and a region 702 where the plurality of steps included in the second customer journey are displayed. In the region 701, for example, the second mental load amount and the second mental bandwidth are displayed as a graph. A customer journey displayed on the screen illustrated in Figure 7 is referred to as, for example, "mental load journey map".

As illustrated in Figure 7, a user referring to the display screen displayed according to the display information can intuitively grasp, for example, transition of the second mental load amount and the second mental bandwidth and a step in which the second mental load amount exceeds the second mental bandwidth.

An area (a shaded part in Figure 7) defined by a mental load graph included in the region 701 can be evaluated as a degree of quantized usability.

The user deepens understanding for a service and a target person by improving an existing customer journey referring to the mental load journey map. Accordingly, since accuracy of prediction of a conversion rate of the target person (for example, a customer) is improved and improvement is easily performed, an investment effect of a measure is improved and, for example, a collection rate of a questionnaire is improved.

A marketing method and budget allocation become efficient. Specifically, it is possible to reasonably perform decision making for, for example, deliberately adopting an analog medium such as a crimped postcard with a QR code (registered trademark) in, for example, an entrance portion of a guideline where a digital notification is misrecognized as a fraud and a target person tends to drop out.

A customer recommendation degree (NPS: Net Promoter Score (registered trademark)) is improved. Specifically, for example, since time and attention resources of a target person are not wasted, CX is improved and complainants and detractors decrease.

A method of calculation in the calculation system 100 is based on an idea of adding an indicator concerning mental resources. Therefore, the user can use both of an evaluation through the calculation system 100 and an existing framework.

Since pacing of the mental resources is systematically and consciously performed by a measure designer, it is expected that advertisement contamination and administrative procedures of uselessly wasting time of the target person are eliminated.

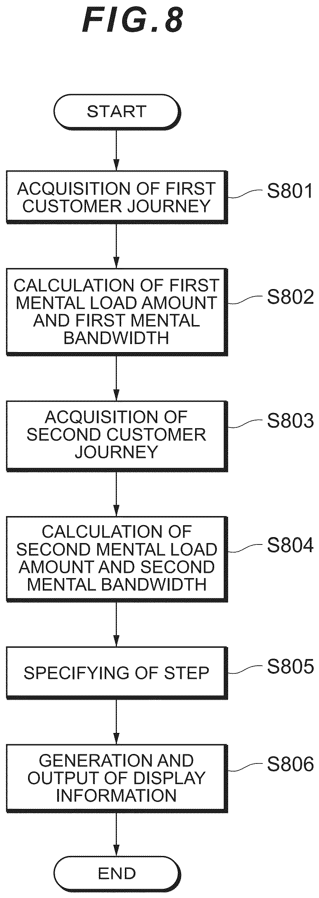

Figure 8 is a flowchart illustrating an example of processing in the calculation system 100.

First, the step acquisition unit 120 acquires the plurality of steps included in the first customer journey (S801). The first mental load calculation unit 130 calculates a first mental load amount and the first mental bandwidth calculation unit 140 calculates a first mental bandwidth (S802).

Subsequently, the step acquisition unit 120 acquires the plurality of steps included in the second customer journey (S803). The second mental load calculation unit 150 calculates a second mental load amount and the second mental bandwidth calculation unit 160 calculates a second mental bandwidth (S804). The step specifying unit 170 specifies at least one step in which the second mental load amount exceeds the second mental bandwidth among the plurality of steps included in the second customer journey.

The display information generation unit 180 generates display information for displaying a mental load journey map and the display information output unit 190 outputs the display information to, for example, the information processing device 200 (S805).

### <Modifications>

The second customer journey includes, for example, a customer journey in a second target person. The second target person may be the same person as the first target person or may be a person different from the first target person. When the second target person is the person different from the first person, the second target person may be, as explained above, a target person having an attribute that is the same or similar to the attribute of the first target person.

The second customer journey may include steps included in one first customer journey or may be constituted from the steps included in one first customer journey. That is, some of the steps included in the second customer journey may be included in the one first customer journey or all of the steps included in the second customer journey may be included in the one first customer journey.

The second customer journey may include steps included in a plurality of first customer journeys or may be constituted from the steps included in the plurality of first customer journeys. That is, some of the steps included in the second customer journey may be included in the plurality of first customer journeys or all of the steps included in the second customer journey may be included in the plurality of first customer journeys. More specifically, when a certain first customer journey A includes a step a1 and a step a2 and another first customer journey B includes a step b1 and a step b2, the second customer journey may include the step a1 and the step b2 or may include a step c not included in the first customer journey A and the first customer journey B. Accordingly, the calculation system 100 can calculates second mental load amounts and second mental bandwidths of a wider variety of second customer journeys.

A mental load amount may be calculated according to, for example, at least any one of an amount or details of content provided to the user in order to pass a step, a traffic line to the content, a traffic line for transitioning from the content to the next step, a component (a BCT component) in a behavior change technique (BCT), and whether or not the target person needs to perform decision making. Here, the content may be, for example, a predetermined web page, e-mail, document, or questionnaire or text, an image, or a moving image provided by the foregoing. The BCT is, for example, means or a technique acting (working) on a behavior change factor. The behavior change factor means, for example, a factor for causing the target person to take a specific behavior. A behavior change factor of the steps in the customer journey can be specified based on, for example, an investigation such as an academic investigation or a consciousness investigation, a theory concerning a behavioral science, persona setting for the target person, or a behavior process map.

The first mental load calculation unit 130 can calculate a first mental load amount based on, for example, information concerning content provided to the user in order to pass a step. The information concerning the content may be, for example, the number of characters or the number of words, ratios of character types (for example, Chinese characters, hiragana, katakana, alphabets, signs, and numbers), a type of a language (for example, Japanese or English), difficulty of words, information concerning a margin amount, or the number of times or a distance the target person moves a line of sight. Specifically, the first mental load calculation unit 130 may calculate a higher first mental load amount as, for example, the ratio of Chinese characters is higher. Accordingly, the calculation system 100 can calculate the first mental load amount based on the amount or the details of the content.

At this time, the first mental load calculation unit 130 may calculate the first mental load amount further based on, for example, an attribute of the target person (for example, a race, an age, sex, a family structure, an academic background, an occupation, an income, presence or absence of employment, or an employment form of the target person). That is, for example, the first mental load calculation unit 130 may calculate, when the target person is a child, a lower first mental load amount as the ratio of Chinese characters is close to a predetermined first ratio or may calculate, when the target person is an adult, a lower first mental load amount as the ratio of Chinese characters is closer to a second ratio higher than the first ratio (that is, Chinese characters are used more at a fixed degree). Accordingly, the first mental load calculation unit 130 can calculate a more accurate first mental load amount further considering the attribute of the target person.

The first mental load calculation unit 130 can calculate the first mental load amount based on, for example, the number of sub-steps included in a step. That is, when the step is "contact by e-mail", the step can include sub-steps such as "notice reception of an electronic message", "open the electronic message", "finish reading the electronic message", and "refer to a web page at a link destination". A mental load of the target person is higher as the number of sub-steps is larger. Thus, the first mental load calculation unit 130 can calculate a higher first mental load amount as, for example, the number of sub-steps is larger. Accordingly, the calculation system 100 can more precisely evaluate the step and more accurately calculate the first mental load amount. Note that, here, the number of sub-steps may be different for each target person. When the number of sub-steps is different for each target person, the first mental load calculation unit 130 may calculate the first mental bandwidth based on a statistic value (for example, an average, a median, a mode, a range decided by an average plus-minus standard deviation, or a range from a first quartile to a third quartile) based on the number of sub-steps that is different for each target person.

The first mental load calculation unit 130 can calculate the first mental load amount based on, for example, a relation between content of a measure that can be applied to a target person and a degree of rising of a probability that the target person passes a step according to implementation of the measure. That is, for example, when it is assumed that a step A in which the probability that the target person passes the step exceeds a predetermined threshold because a measure of transmitting a predetermined message to the target person is implemented and a step B in which the probability that the target person passes the step exceeds the predetermined threshold because a measure of performing attraction by telephone on the target person is implemented are compared, if it is presumed that a mental load in the target person is higher in the attraction by the telephone than the transmission of the message, the step A can be evaluated as a step that the target person can more easily pass. Thus, the first mental load calculation unit 130 can calculate a smaller first mental load amount for the step A and calculate a higher first mental load amount for the step B. Accordingly, the calculation system 100 can more accurately calculate the first mental load amount considering characteristics of steps.

The first mental load calculation unit 130 can calculate the first mental load amount based on, for example, a quantitative value necessary to pass a step. The quantitative value may be, for example, a measured value measured when the target person actually passes the step or may be a predicted value predicted based on a learning model trained based on the measured value. The quantitative value may be a time necessary to pass the step (for example, an opening time of a message, a click time, a browsing time, or a scroll time in a web page) or the number of times of an operation necessary to pass the step (for example, the number of times of opening of the message, the number of times of click, the number of times of browsing, and the number of times of scroll in the web page). Accordingly, the calculation system 100 can more accurately calculate the first mental load amount considering characteristics of the step.

The first mental load calculation unit 130 can calculate the first mental load amount based on, for example, a learning model trained based on information concerning passage of or withdrawal from the step by the target person. Accordingly, the calculation system 100 can more accurately calculate the first mental load amount based on a passage result or a withdrawal result by the target person.

The first mental load calculation unit 130 can calculate the first mental load amount, for example, by combining the calculation methods for the first mental load amount described in the present specification. At this time, the first mental load calculation unit 130 may calculate the first mental load amount, for example, using a combination of different calculation methods for each step. Accordingly, the calculation system 100 can more accurately calculate the first mental load amount considering characteristics of the step.

The first mental load calculation unit 130 may repeat calculating the first mental load amount for a predetermined period based on, for example, an initial model for calculating the first mental load amount, updating the initial model based on learning data accumulated in the predetermined period, and further calculating the first mental load amount based on the updated model. Accordingly, the first mental load calculation unit 130 can more accurately calculate the first mental load amount by sequentially learning the passage result or the withdrawal result of the target person.

At this time, the first mental load calculation unit 130 may update the model based on, for example, a learning model trained based on information concerning passage of or withdrawal from a step in a first target person and calculate a first mental load amount of the first target person based on the updated model. Accordingly, the first mental load calculation unit 130 can more accurately calculate the first mental load amount of the first target person based on a model suitable for the calculation of the first mental load amount of the first target person.

The calculation method for the first mental load amount explained above can be read as appropriate as a calculation method for a second mental load amount by the second mental load calculation unit 150. In particular, for example, the second mental load calculation unit 150 can calculate a mental load amount (that is, the second mental load amount) of a step included in the second customer journey and not included in the first customer journey. Note that, in the calculation system 100, the calculation method for the first mental load amount and the calculation method for the second mental load amount may be the same or may be different.

A mental bandwidth may be calculated according to an environment factor of an environment of a target person who passes a step or a taste, an attribute, a cognitive ability, or an information processing ability of the target person. Here, the environment factor may be, for example, timing (a period, a season, a time period, a day of week, or the like) when the target person passes the step.

The first mental bandwidth calculation unit 140 can calculate a mental bandwidth of a step based on a mental load amount of each target person in the step and a passage rate or a withdrawal rate of the step of a group of predetermined target persons (for example, a group including target persons having the same or similar attribute). Specifically, for example, when the number of seconds until a click motion necessary to pass a step A is set as a mental load amount and a passage rate of the step A is 20%, the first mental bandwidth calculation unit 140 can calculate, as the first mental bandwidth, for example, a statistic value, for example, an upper limit of the number of seconds of target persons of the top 20% in the group of the predetermined target persons and can calculate, as the first mental bandwidth, a maximum value of the number of seconds of target persons who passed the step A (that is, a maximum value of first mental load amounts of the target persons who passed the step A).

The first mental bandwidth calculation unit 140 may calculate the first mental bandwidth based on a result of a questionnaire for a target person who actually passed a step. More specifically, a questionnaire concerning a degree of a mental load at the time when passing the step or an impression for the degree of the mental load, for example, may be implemented for the target person who actually passed the step and a mental bandwidth may be calculated based on a mental load amount of the target person who made a predetermined answer (for example, "it was easy" or "it was hard") in the questionnaire. At this time, the first mental bandwidth may be calculated based on a statistic value (for example, an average, a median, a mode, a range decided by an average plus-minus standard deviation, or a range from a first quartile to a third quartile) of the mental load amount of the target person who made the predetermined answer in the questionnaire.

The first mental bandwidth calculation unit 140 can calculate the first mental bandwidth based on a learning model trained based on a passage result or a withdrawal result of a step in the target person. Here, the learning model is trained beforehand based on characteristics of the step and a mental load amount at the time when the target person passed the step. Then, the first mental bandwidth calculation unit 140 inputs, to the learning model, the characteristics of the target step for which the first mental bandwidth is calculated and acquires the first mental bandwidth of the target step.

The first mental bandwidth calculation unit 140 may calculate the first mental bandwidth based on, for example, biological data of the target person. The biological data of the target person may be acquired from, for example, a wearable device worn by the target person. The biological data of the target person may be, for example, heart rate data, blood pressure data, or data concerning expansion and reduction of the pupil. Specifically, the first mental bandwidth calculation unit 140 can calculate the first mental bandwidth, for example, by evaluating that the target person cannot allow the mental load more as the heart rate is higher.

The calculation method for the first mental bandwidth explained above can be read as appropriate as a calculation method for a second mental bandwidth by the second mental bandwidth calculation unit 160. In particular, for example, the second mental bandwidth calculation unit 160 can calculate a mental bandwidth (that is, the second mental bandwidth) of a step included in the second customer journey and not included in the first customer journey. Note that, in the calculation system 100, the calculation method for the first mental load amount and the calculation method for the second mental load amount may be the same or may be different.

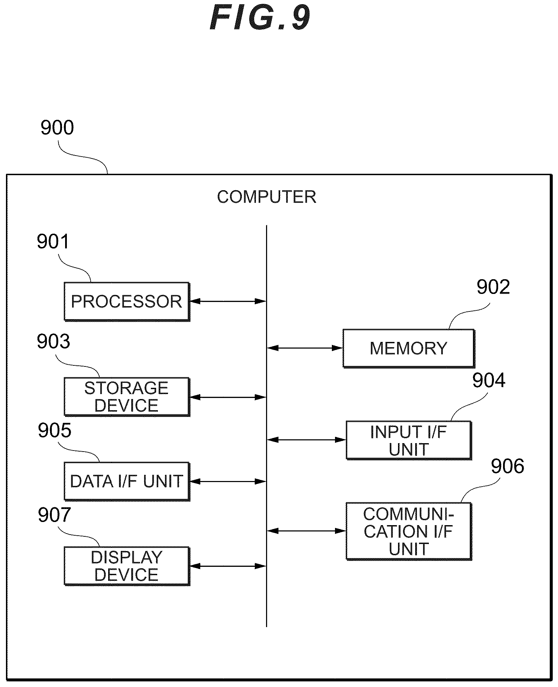

Subsequently, an example of a hardware configuration in the case in which the calculation system 100 is implemented by a computer 900 is explained with reference to Figure 9. Figure 9 is a diagram illustrating an example of the hardware configuration of the computer 900.

As illustrated in Figure 9, the computer 900 includes, for example, a processor 901, a memory 902, a storage device 903, an input I/F unit 904, a data I/F unit 905, a communication I/F unit 906, and a display device 907.

The computer 900 may be, for example, a server computer, a personal computer (for example, a desktop computer, a laptop computer, or a tablet terminal), a media computer platform (for example, a cable, a satellite set-top box, or a digital video recorder), a hand-held computer device (for example, a PDA or an electronic mail client), or computers of other types, or a communication platform.

The processor 901 is a control unit that controls various kinds of processing in the computer 900 by executing a program stored in the memory 902.

The memory 902 is a storage medium such as a RAM (Random Access Memory). The memory 902 temporarily stores a program code of a program to be executed by the processor 901 and data that is necessary when the program is executed.

The storage device 903 is a nonvolatile storage medium such as a hard disk drive (HDD) or a flash memory. The storage device 903 stores an operating system and various programs for implementing the components explained above.

The input I/F unit 904 is a device for receiving input from the user. The input I/F unit 904 is, for example, a keyboard, a mouse, a touch panel, various sensors, or a wearable device. The input I/F unit 904 may be connected to the computer 900 via an interface such as a USB (Universal Serial Bus).

The data I/F unit 905 is a device for inputting data from the outside of the computer 900. The data I/F unit 905 is, for example, a drive device for reading data stored in various storage media. The data I/F unit 905 may be provided on the outside of the computer 900. When the data I/F unit 905 is provided on the outside of the computer 900, the data I/F unit 905 is connected to the computer 900 via an interface such as a USB.

The communication I/F unit 906 is a device for performing data communication via a network such as the Internet by wire or radio with a device on the outside of the computer 900. The communication I/F unit 906 may be provided on the outside of the computer 900. When the communication I/F unit 906 is provided on the outside of the computer 900, the communication I/F unit 906 is connected to the computer 900 via an interface such as a USB.

The display device 907 is a device for displaying various kinds of information. The display device 907 is, for example, a liquid crystal display, an organic EL (Electro-Luminescence) display, or a display of a wearable device. The display device 907 may be provided on the outside of the computer 900. When the display device 907 is provided on the outside of the computer 900, the display device 907 is connected to the computer 900 via a display cable or the like. When a touch panel is adopted as the input I/F unit 904, the display device 907 may be integrated with the input I/F unit 904.

The embodiment of the present disclosure is explained above. The calculation system 100 can calculate a first mental bandwidth based on a first mental load amount, acquire each of a plurality of steps in a second customer journey, calculate a second mental load amount based on the first mental load amount, and calculate a second mental bandwidth based on the first mental bandwidth. Accordingly, the calculation system 100 can consider a mental load of a target person in evaluation of a customer journey.

The calculation system 100 can output display information for displaying, on an information processing device, in association with order in the second customer journey, each of the plurality of steps included in the second customer journey, the second mental load amount, and the second mental bandwidth. Accordingly, a user of the calculation system 100 can intuitively grasp a calculation result in the calculation system 100.

The calculation system 100 can output display information in which the display of the second mental load amount and the second mental bandwidth is switched according to operation of changing at least one step of the plurality of steps included in the second customer journey on a display screen displayed according to the display information. Accordingly, the user of the calculation system 100 can dynamically grasp a calculation result after the step is changed.

The calculation system 100 can specify at least one step in which the second mental load amount exceeds the second mental bandwidth among the plurality of steps included in the second customer journey. Accordingly, the calculation system 100 can specify a step that should be improved in the second customer journey.

Note that the present embodiment is an embodiment for facilitating understanding of the present disclosure and is not an embodiment for limitedly interpreting the present disclosure. The present disclosure can be changed and improved without departing from the spirit thereof, and equivalents of the present disclosure are also included in the present disclosure.

### Reference Signs List

100 Calculation system, 110 Storage unit, 120 Step acquisition unit, 130 First mental load calculation unit, 140 First mental bandwidth calculation unit, 150 Second mental load calculation unit, 160 Second mental bandwidth calculation unit, 170 Step specifying unit, 180 Display information generation unit, 190 Display information output unit, 200 Information processing device

## Claims

1. A calculation system comprising:
a first mental bandwidth calculation unit that calculates, based on a first mental load amount indicating a degree of a mental load in at least one first target person required to pass each of a plurality of steps included in a first customer journey, for each of the plurality of steps included in the first customer journey, a first mental bandwidth indicating a degree of a mental load with which the at least one first target person is capable of passing the step;
a step acquisition unit that acquires, in association with order in a second customer journey, each of a plurality of steps included in the second customer journey;
a second mental load calculation unit that calculates, based on the first mental load amount, a second mental load amount indicating a degree of a mental load required to pass each of the plurality of steps included in the second customer journey; and
a second mental bandwidth calculation unit that calculates, based on the first mental bandwidth, for each of the plurality of steps included in the second customer journey, a second mental bandwidth indicating a degree of a mental load with which at least one second target person is capable of passing the step.

2. The calculation system according to claim 1, further comprising a display information output unit that outputs display information for displaying, on an information processing device, in association with order in the second customer journey, each of the plurality of steps included in the second customer journey, the second mental load amount, and the second mental bandwidth.

3. The calculation system according to claim 2, wherein the display information output unit outputs display information in which the display of the second mental load amount and the second mental bandwidth is switched according to operation of changing at least one step of the plurality of steps included in the second customer journey on a display screen displayed according to the display information.

4. The calculation system according to any one of claims 1 to 3, further comprising a step specifying unit that specifies at least one step in which the second mental load amount exceeds the second mental bandwidth among the plurality of steps included in the second customer journey.

5. The calculation system according to any one of claims 1 to 3, wherein the plurality of steps included in the first customer journey includes a plurality of behavior steps and at least one transition step among the plurality of behavior steps, and
the calculation system further comprises a first mental load calculation unit that calculates the first mental load amount based on a behavior mental load amount in the at least one first target person required for each of the plurality of behavior steps and a transition mental load amount in the at least one first target person required for the at least one transition step.

6. The calculation system according to any one of claims 1 to 3, wherein the first mental load amount includes a distribution of first mental load amounts of each of a plurality of first target persons.

7. The calculation system according to any one of claims 1 to 3, wherein the second mental load amount includes a value corresponding to a time required to pass each of the plurality of steps included in the second customer journey, and
the second mental bandwidth includes, for each of the plurality of steps included in the second customer journey, a value corresponding to a time that can be invested for passage by the at least one second target person.

8. The calculation system according to any one of claims 1 to 3, wherein the at least one first target person and the at least one second target person have a same or similar attribute.

9. A calculation method comprising, by a computer:
calculating, based on a first mental load amount indicating a degree of a mental load in at least one first target person required to pass each of a plurality of steps included in a first customer journey, for each of the plurality of steps included in the first customer journey, a first mental bandwidth indicating a degree of a mental load with which the at least one first target person is capable of passing the step;
acquiring, in association with order in a second customer journey, each of a plurality of steps included in the second customer journey;
calculating, based on the first mental load amount, a second mental load amount indicating a degree of a mental load required to pass each of the plurality of steps included in the second customer journey; and
calculating, based on the first mental bandwidth, for each of the plurality of steps included in the second customer journey, a second mental bandwidth indicating a degree of a mental load with which at least one second target person is capable of passing the step.

10. A calculation program for causing a computer to implement:
a first mental bandwidth calculation unit that calculates, based on a first mental load amount indicating a degree of a mental load in at least one first target person required to pass each of a plurality of steps included in a first customer journey, for each of the plurality of steps included in the first customer journey, a first mental bandwidth indicating a degree of a mental load with which the at least one first target person is capable of passing the step;
a step acquisition unit that acquires, in association with order in a second customer journey, each of a plurality of steps included in the second customer journey;
a second mental load calculation unit that calculates, based on the first mental load amount, a second mental load amount indicating a degree of a mental load required to pass each of the plurality of steps included in the second customer journey; and
a second mental bandwidth calculation unit that calculates, based on the first mental bandwidth, for each of the plurality of steps included in the second customer journey, a second mental bandwidth indicating a degree of a mental load with which at least one second target person is capable of passing the step.
